Europäisches Patentamt

European Patent Office

Office européen des brevets

(11) Veröffentlichungsnummer: **0 356 631**
**A2**

(12) **EUROPÄISCHE PATENTANMELDUNG**

(21) Anmeldenummer: **89110457.2**

(22) Anmeldetag: **09.06.89**

(51) Int. Cl.5: **A01C 17/00**

(30) Priorität: **31.08.88 DE 3829437**

(43) Veröffentlichungstag der Anmeldung:
**07.03.90 Patentblatt 90/10**

(84) Benannte Vertragsstaaten:
**DE FR GB NL SE**

(71) Anmelder: **Amazonen-Werke H. Dreyer GmbH
& Co. KG
Am Amazonenwerk 9-13
D-4507 Hasbergen-Gaste(DE)**

(72) Erfinder: **Higgen, Reinhard
Gartenstrasse 1
D-2872 Hude 1(DE)**

(54) **Zentrifugaldüngerstreuer, insbesondere Grossflächenstreuer.**

(57) Zentrifugaldüngerstreuer, insbesondere Großflächendüngerstreuer mit einem Vorratsbehälter und zumindest einem den um aufrechte Achsen rotierenden und mit Wurfelementen ausgestatteten Schleuderscheiben das sich im Vorratsbehälter befindliche Material, wie Klärschlamm oder Dünger, zuführen den Dosiereinrichtungen, wobei die Schleuderscheiben auf aufrechtstehenden Welle montiert sind, welche aus einem unterhalb der Schleuderscheiben sich befindenen Getriebe herausragen. Um auch beim Ausbringen von Klärschlamm und feuchtem Dünger einen freien Lauf der Schleuderscheiben zu gewährleisten, ist vorgesehen, daß unterhalb der Wurfschaufeln (14) und/oder Schleuderscheiben (13) die Wurfschaufeln (14) und/oder die Schleuderscheiben (14) nach unten überragende Räumelemente (18) angeordnet sind.

FIG. 1

EP 0 356 631 A2

## Zentrifugaldüngerstreuer, insbesondere Großflächendüngerstreuer

Die Erfindung betrifft einen Zentrifugaldüngerstreuer, insbesondere Großflächendüngerstreuer gemäß des Oberbegriffes des Patentanspruches 1.

Ein derartiger Zentrifugaldüngerstreuer ist bereits durch die DE-OS 33 13 892 bekannt. Dieser Zentrifugaldüngerstreuer ist als Großflächenstreuer ausgebildet und weist einen langgestreckten Vorratsbehälter auf. In dem unteren Bereich des Vorratsbehälters ist ein den Vorratsbehälter nach unten verschließendes Förderband angeordnet, welches gleichzeitig als Dosierorgan in Verbindung mit einem am hinteren Ende des Vorratsbehälters angeordneten Schieber ausgebildet ist. Unterhalb des hinteren Endes des Förderbandes ist ein Schleuderstreuwerk angeordnet, welches aus um aufrechte Achsen rotierenden und mit Wurfelementen ausgestatteten Schleuderscheiben besteht. Diesen Schleuderscheiben wird das sich im Vorratsbehälter befindliche Material von dem angetriebenen Förderband zugeführt. Die Schleuderscheiben sind auf aufrechtstehenden Wellen rotiert, welche aus einem unterhalb der Schleuderscheiben sich befindenen Getriebe herausragen. Beim Ausbringen von insbesondere Klärschlamm oder feuchten Düngern besteht das Problem, daß sich im Laufe des Ausbringvorganges Material in dem Raum zwischen den Schleuderscheiben und dem Getriebe festsetzt und die Schleuderscheiben abbremst. Hierdurch kann es zu Beschädigungen an den Schleuderscheiben, dem Getriebe und den Lagerungen sowie den Antriebselementen kommen.

Der Erfindung liegt die Aufgabe zugrunde, auch beim Ausbringen von Klärschlamm und feuchtem Dünger einen freien Lauf der Schleuderscheiben zu gewährleisten.

Diese Aufgabe wird erfindungsgemäß durch das Merkmal des Kennzeichens des Patentanspruches 1 gelöst. Infolge dieser Maßnahmen wird durch die nach unten überragenden Räumelemente evtl. in den Raum zwischen den Schleuderscheiben und dem Getriebe sowie den weiteren sich unter den Schleuderscheiben befindlichen Teilen gelangendes auszubringendes Material von den Räumelementen zur Seite geräumt und abgeschleudert, so daß sich nicht derartig viel Material zwischen den Schleuderscheiben und den sich darunter befindlichen festen Teilen anlagern kann, welches zu einem Abbremsen oder einem Schleifen der Schleuderscheiben auf diesem Material führen könnet. Ein freier Lauf der Schleuderscheiben bleibt in jedem Falle gewährleistet.

In vorteilhafter Weise sind die Räumelemente derart ausgebildet, daß die Räumelemente eine größere Umlaufbahn als die Wurfelemente oder der Außenrand der Schleuderscheiben beschreiben.

Hierdurch ist eine sehr große Sicherheit gegeben, daß immer ein freier Lauf der Schleuderscheiben gewährleistet bleibt, und daß das Material auch ausreichend weit weggeräumt wird, welches in den Raum unterhalb der Schleuderscheiben gelangen sollte.

Um einen ruhigen sowie ausgewuchteten Lauf der Schleuderscheiben zu erreichen, ist erfindungsgemäß vorgesehen, daß zumidest zwei Räumelemente vorgesehen sind, die gegenüberliegend angeordnet sind.

Die Erfindung wird im folgenden anhand eines Ausführungsbeispiels näher erläutert. Hierbei zeigen

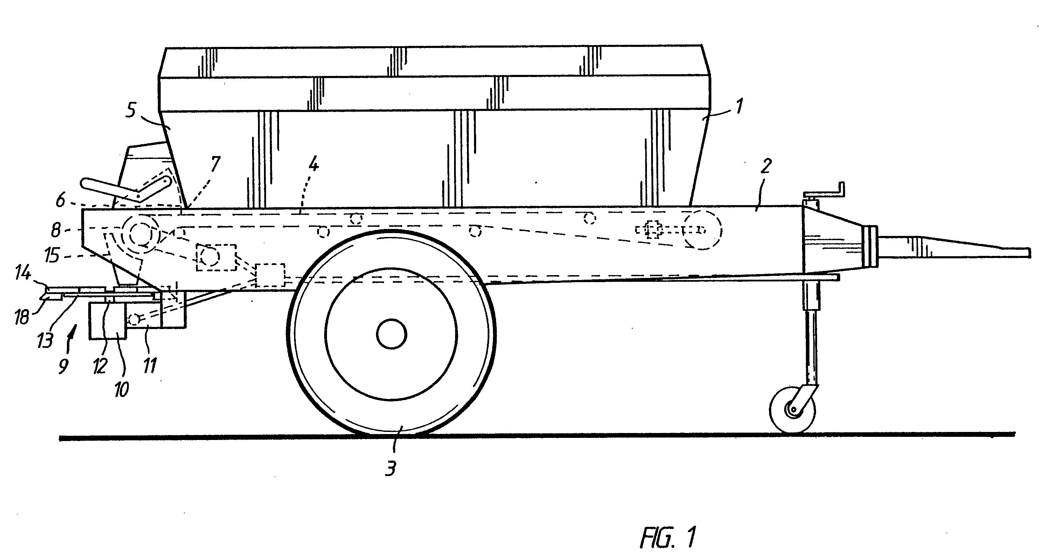

Fig. 1 den Großflächendüngerstreuer in der Seitenansicht,

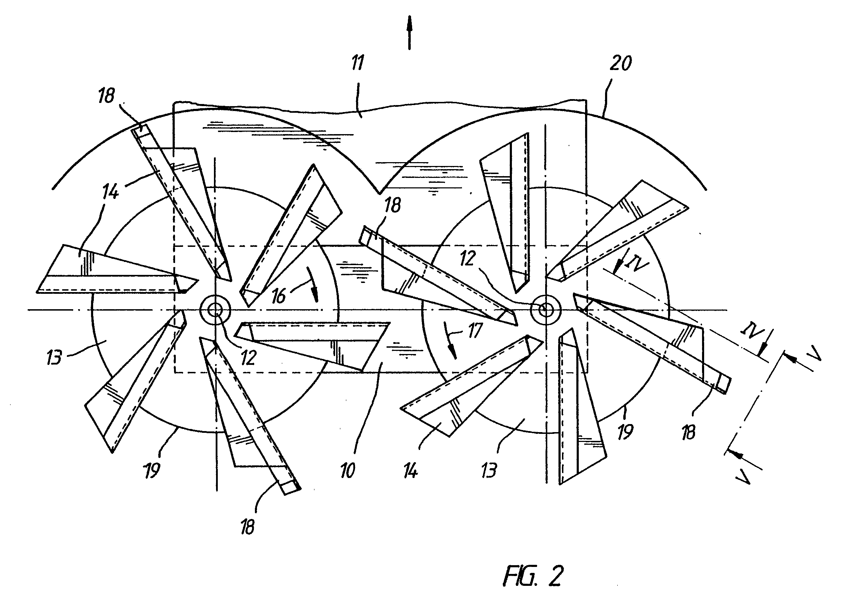

Fig. 2 das Zentrifugalstreuwerk in der Draufsicht,

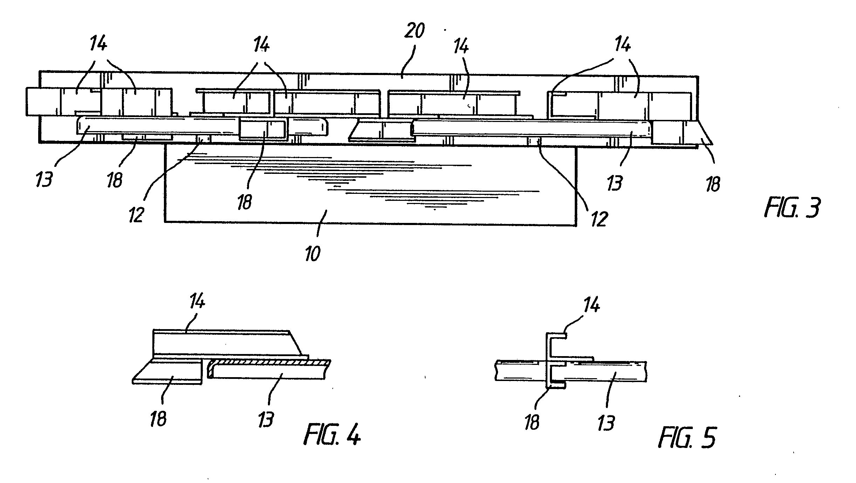

Fig. 3 das Zentrifugalstreuwerk in der Ansicht von hinten,

Fig. 4 die Anordnung der Räumelemente an den Schleuderscheiben oder der Wurfschaufel in der Ansicht IV -IV und

Fig. 5 die Anordnung des Räumelementes an der Wurfschaufel bzw. der Schleuderscheibe in der Ansicht V - V.

Der als Großflächendüngerstreuer ausgebildete Zentrifugaldüngerstreuer ist mit einem Vorratsbehälter 1, einem Rahmen 2, einem mit Laufrädern 3 ausgestatteten Fahrwerk ausgerüstet. Im unteren Bereich des Vorratsbehälters 1 befindet sich das über eine Gelenkwelle von einem den Großflächenstreuer ziehenden Schlepper antreibbare Förderband 4. In dem hinteren Bereich 5 des Vorratsbehälters 1 ist die über den Schieber 6 einstellbare Austrittsöffnung 7 angeordnet. Im Bereich der hinteren Austrittsöffnung 7 bzw. dem hinteren Ende 8 des Förderbandes 4 ist das als Zentrifugalstreuwerk 9 ausgebildete Streuorgan angeordnet. Das Zentrifugalstreuwerk 9 weist das Getriebe 10 auf, welches über Halterungen 11 am Rahmen 2 des Großflächendüngerstreuers angeordnet ist. Auf den aufrecht aus dem Getriebe 10 herausragenden Antriebswellen 12 sind die Schleuderscheiben 13 drehfest angeordnet. Die Schleuderscheiben 13 werden ebenfalls über das Getriebe 10 von der Gelenkwelle angetrieben. Die Schleuderscheiben 13 weisen die Wurfelemente 14 auf. Über das Förderband 4 wird der sich im Vorratsbehälter 1 befindliche Dünger oder Klärschlamm oder andere auszubringende Materialien über die Auslaßöffnung 7 und dem Leittrichter 15 den Schleuderscheiben 13 zugeführt. Die Schleuderscheiben 13 werden in entgegengesetzter Richtung gemäß der Pfeile 16 und 17 angetrieben. Unterhalb der Wurfschaufeln 14 und den Schleuderscheiben 13 sind die die Wurfschaufeln 14 und die Schleuderscheiben 13 nach unten überragenden Räumelemente 18 angebracht. Die Räumelemente 18 sind an den Wurfschaufeln 14 angeschraubt. Es ist jedoch auch denkbar, daß die Räumelemente 18 an den Schleuderscheiben 13 im Bereich der einzelnen Wurfschaufeln 14 oder zwischen den Wurfschaufeln angeordnet sind. Pro Schleuderscheibe 13 sind zwei Räumelemente 18 vorgesehen, die gegenüberliegend angeordnet sind. Die Räumelemente 18 beschreiben in bevorzugter Weise eine größere Umlaufbahn als die Wurfelemente 14 oder der Außenrand 19 der Schleuderscheiben 13. Somit überragen die Räumelemente 18 mit ihrer äußeren Kante die äußere Kante der Wurfelemente 14 sowie den Außenrand 19 der Schleuderscheiben 13. Auf der Vorderseite des Streuorgans ist am Rahmen 2 bzw. dem Halteelement 11 der Leit- und Schutzschirm 20 angeordnet, durch welchen gewährleistet ist, daß der auszubringende Dünger, wie Kalk, Hühnerdung etc. nicht nach vorn abgeworfen wird. Der in den Raum zwischen dem Leit- und Schutzschirm 20, den Halteelementen 11 sowie dem Getriebe 10 einerseits und den Wurfschaufeln 14 und den Schleuderscheiben 13 gelangene Dünger wird durch die Räumelemente 18 aus diesem Bereich herausgeräumt, so daß der in diesen Raum gelangene Dünger nicht an den Wurfschaufeln 14 bzw. Schleuderscheiben 13 schleifen kann. Durch die Räumelemente 18 wird zusätzlich noch "Wind" erzeugt, durch welchen insbesondere leichterer Dünger, wie beispielsweise Hühnerdung aus diesem Bereich herausgeblasen wird. Sehr feuchter Dünger wird von den Räumelementen 18, die beispielsweise als Schaufeln ausgebildet sein können, herausgeschoben und aufgrund der durch die Rotation erzeugten Zentrifugalkraft abgeschleudert.

**Ansprüche**

1. Zentrifugaldüngerstreuer, insbesondere Großflächendüngerstreuer mit einem Vorratsbehälter und zumindest einem den um aufrechte Achsen rotierenden und mit Wurfelementen ausgestatteten Schleuderscheiben das sich im Vorratsbehälter befindliche Material, wie Klärschlamm oder Dünger, zuführenden Dosiereinrichtung, wobei die Schleuderscheiben auf aufrechtstehenden Wellen montiert sind, welche aus einem unterhalb der Schleuderscheiben sich befindenen Getriebe herausragen, dadurch gekennzeichnet, daß unterhalb der Wurfschaufeln (14) und/oder Schleuderscheiben (13) die Wurfschaufeln (14) und/oder die Schleuderscheiben (13) nach unten überragende Räumelemente (18) angeordnet sind.

2. Zentrifugaldüngerstreuer nach Anspruch 1, dadurch gekennzeichnet, daß die Räumelemente (18) eine größere Umlaufbahn als die Wurfelemente (14) oder der Außenrand (19) der Schleuderscheiben (13) beschreiben.

3. Zentrifugaldüngerstreuer nach Anspruch 1, dadurch gekennzeichnet, daß zumindest zwei Räumelemente (18) vorgesehen sind, die gegenüberliegend angeordnet sind.

EP 0 356 631 A2

FIG. 1

FIG. 2

EP 0 356 631 A2

FIG. 3

FIG. 4

FIG. 5

EP 0 356 631 A2